(19) Europäisches Patentamt
European Patent Office
Office européen des brevets

(11) Publication number: **0 432 641 A2**

(12) # EUROPEAN PATENT APPLICATION

(21) Application number: **90123411.2**

(51) Int. Cl.5: **C08L 71/12**, C08K 7/14

(22) Date of filing: **06.12.90**

(30) Priority: **15.12.89 US 451405**

(43) Date of publication of application: **19.06.91 Bulletin 91/25**

(84) Designated Contracting States: **DE ES FR GB IT NL**

(71) Applicant: **GENERAL ELECTRIC COMPANY**
**1 River Road**
**Schenectady, NY 12345(US)**

(72) Inventor: **Lee, Gim Fun, Jr.**
**11 Drawbridge Drive**
**Albany, New York 12203(US)**
Inventor: **Sebok, Ernesto Esteban Tachauer**
**RUA Indiana, 118 Apt. 102**
**BR-04562 Sao Paulo(BR)**

(74) Representative: **Schüler, Horst, Dr.**
**Kaiserstrasse 69**
**W-6000 Frankfurt/Main 1(DE)**

(54) **Reinforced polyphenylene ether resin compositions having improved melt flow.**

(57) An improved polyphenylene ether composition is disclosed, comprising:
a) at least one polyphenylene ether resin, having an intrinsic viscosity of less than about 0.4 dl/g as measured in solution in chloroform at 25° C, and
b) about 5 weight percent to about 50 weight percent glass fibers.

EP 0 432 641 A2

# REINFORCED POLYPHENYLENE ETHER RESIN COMPOSITIONS HAVING IMPROVED MELT FLOW

This invention relates generally to novel and improved resinous compositions, and more particularly to reinforced polyphenylene ether resin compositions having a unique combination of properties.

Polyphenylene ethers (also known as PPE) are a well-known class of engineering resins which usually exhibit an array of desirable properties, such as heat resistance, toughness, hydrolytic stability, dimensional stability, and dielectric properties.

Many of the high-strength applications of PPE-based compositions utilize reinforcing agents, such as glass, mica, or talc, which add rigidity to molded articles such as automotive panels. These agents generally increase the tensile and flexural strength of the articles as well.

The use of reinforcing agents such as glass fiber can, however, lower the melt flow capability of such compositions. Polymer melt flow is especially critical in commercial, high-speed molding operations for large parts, where lower melt flow results in mold-filling problems, higher processing times, and consequently, higher production costs.

Furthermore, glass fiber tends to make polymeric materials of this type brittle; and improvements in impact resistance are difficult to achieve. Impact modifiers such as block copolymers of styrene and butadiene are often used to shore up this property. However, their use sometimes adversely affects other properties, such as flame retardance.

Thus, there is a continuing need for reinforced PPE materials which exhibit a high degree of melt flow, and which can be molded into high-strength articles with excellent impact resistance.

## SUMMARY OF THE INVENTION

The composition of the present invention comprises:

a) at least one polyphenylene ether resin, having an intrinsic viscosity (IV) of less than about 0.4 dl/g as measured in solution in chloroform at 25 °C, and

b) about 5 weight percent to about 50 weight percent glass fibers, based on the weight of the entire composition.

The inventors have discovered that such a composition exhibits very high melt flow, as compared to compositions which contain PPE resins having higher intrinsic viscosities.

The scope of this invention further includes an improved method of molding glass-filled PPE compositions, using a PPE resin having an intrinsic viscosity less than about 0.4 dl/g.

## DETAILED DESCRIPTION OF THE INVENTION

PPE resins which are useful for this invention include those well-known in the technical and commercial environment, with the proviso that they possess the molecular weight/intrinsic viscosity characteristic discussed below. Many of them are described in U.S. patents 3,306,874; 3,306,875; and 3,432,469 of Allan Hay; U.S. patents 3,257,357 and 3,257,358 of Gelu Stamatoff; and U.S. patent 4,806,602 of Dwain M. White et al., all incorporated herein by reference.

Both homopolymer and copolymer polyphenylene ethers are within the scope of this invention.

The preferred PPE resins are homo- and copolymers which comprise a plurality of structural units of the formula:

I

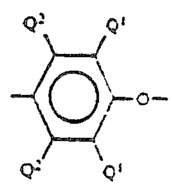

wherein each $Q^1$ is independently halogen, primary or secondary lower alkyl (i.e., alkyl containing up to 7 carbon atoms), phenyl, haloalkyl, aminoalkyl, hydrocarbonoxy, or halohyrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl, isobutyl, n-amyl,

isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably any alkyl radicals are straight chain, rather than branched. Most often, each $Q^1$ is alkyl or phenyl, especially $C_{1-4}$ alkyl, and each $Q^2$ is hydrogen.

Especially preferred polyphenylene ethers will be comprised of units derived from 2,6-dimethyl phenol Also contemplated are PPE copolymers comprised of units derived from 2,6-dimethyl phenol and 2,3,6-trimethyl phenol

The PPE resin of the present invention must have an intrinsic viscosity (IV) less than about 0.4 dl.g, as measured in chloroform at 25° C. In more preferred embodiments, the IV should be less than about 0.35 dl/g. Especially preferred embodiments of this invention call for the IV of the PPE to be less than about 0.30 dl/g.

The glass used in compositions of this invention may be in various forms, such as fibers, particles, or spheres.

Examples of suitable glass can be found in U.S. Patents 4,154,712 and 4,252,913, as well as in EP-A 288 787. The contents of each of these patents and applications are incorporated herein by reference.

Although a wide variety of glass may be used for the present invention, a preferred type for certain embodiments is that characterized by "bonding-type" glass fibers, as disclosed in the above-mentioned application S.N. 043,289. Bonding-type glass fibers typically have an affinity toward the resin in the thermoplastic matrix in which they are combined. Such glass reinforcement is considered to have good wetting and good bonding properties. Glass reinforcing fibers having maximum affinity for the matrix exhibit the greatest improvements in physical strength. When observing the fractured surface of a PPE-based composite containing these fibers, the fibers appear non-shiny, which indicates that cohesive failure of the matrix has taken place, i.e., the resinous material has remained in substantial contact with the fibers.

In contrast to the bonding-type glass reinforcement, non-bonding glass reinforcement has a relatively poor bonding and wetting affinity to the resin matrix. The fibers appear shiny, as observed on the fractured surface of the composite, indicating that they are not covered by resinous material, and that the composite has, undesirably, undergone adhesive failure.

A suitable procedure for determining the "bonding" or "non-bonding" characteristics of glass fibers in a composite is as follows:

1) Prepare a PPE-based composition as in Example 1, using a selected type of glass reinforcing material. The composition is then molded into a test bar, for example, an Izod Impact Bar having a dimension of 1/8" height x 1/2" width x 2.5" length.

2) The bar is broken into two pieces, with a break point at approximately the center of its length.

3) The fractured surface is examined under an optical microscope at a magnification of 10-20.

4) The percentage of visible fibers which are non-shiny is determined. If more than about 75% of the fibers are non-shiny, the glass fibers are considered to be "bonding". Preferred glass fiber systems exhibit greater than about 90% non-shiny resin-coated fibers.

The length of the glass fibers may also influence the impact behavior of the composite. As a rule, longer fibers are desirable.

Usually, about 5 weight percent to about 50 weight percent glass is used, based on the weight of the entire composition. More preferred embodiments utilize an amount of glass in the range of about 20 weight percent to about 30 weight percent.

Compositions of this invention can optionally include vinyl aromatic materials, most of which are well known in the art, as shown, for example, by the disclosures of U.S. patents 3,383,435; 4,593,058, and 4,661,560, all incorporated herein by reference. These materials are sometimes referred to as polyalkenyl aromatics. Non-limiting examples of the polyalkenyl aromatics are homopolymers such as polystyrene and monochloropolystyrene, as well as modified styrene resins, such as rubber-modified polystyrene (HIPS), the styrene-containing copolymers such as the styrene-acrylonitrile copolymers (SAN), styrene-butadiene copolymers, styrene-acrylonitrile-alpha-alkyl styrene copolymers, styrene-acrylonitrile-butadiene copolymers (ABS), poly-alpha-methylstyrene, copolymers of ethylvinylbenzene and divinylbenzene, copolymers of styrene and maleic anhydride, and copolymers of styrene and EPDM (a terpolymer elastomer made from ethylenepropylene diene monomer). Rubber-modified polystyrene is the preferred polyalkenyl aromatic material. A preferred amount of polyalkenyl aromatic material, when employed, is about 5% to about 55% by weight, based on the weight of the entire composition, with about 35% to about 55% being most preferable.

Certain preferred embodiments of the compositions of this invention are substantially free of elastomeric block copolymers such as the A-B-A' materials described below (these materials have often been used previously in compositions of this type). An example of when these copolymers should be excluded is when

a very high degree of flame resistance is desired. "Substantially free" as used in this particular context can be defined as an amount which will not adversely affect the flame resistance of the material. Usually, this amount is less than 5% by weight (elastomeric block copolymer), based on the weight of the entire composition. In some embodiments, this amount is zero, i.e., no elastomeric block copolymer is present in the composition.

However, in those embodiments where elastomeric block copolymers (sometimes referred to as "modifier resins") may be used, various types are suitable. Many are well-known in the art and are described, for example, in U.S. patent 4,080,356 of Gergen et al., U.S. patents 4,166,055 and 4,584,334, and in European Patent 0,095,098, all incorporated herein by reference. Examples of commercially available block copolymers are the Kraton® series of polymers, available from Shell Oil Company.

Some of the block copolymers are characterized by an A-B, A-B-$A^1$, or $(A\text{-}B)_m$-X structure, or mixtures of these structures, wherein A and A' are each polymerized vinyl aromatic hydrocarbon blocks, each B is derived from at least one polymerized conjugated diene, X is the radical of a multifunctional coupling agent, and m is an integer of at least 2. The block polymers preferably contain between about 15 and 50% by weight of vinyl aromatics.

A and $A^1$ are often independently selected from the group consisting of styrene, alpha-methyl styrene, vinyl toluene, vinyl xylene, and vinyl naphthalene; and B is often derived from polyisoprene or polybutadiene.

Each block A and $A^1$ usually has a molecular weight in the range of about 2000 to 100,000, while each block B usually has a molecular weight in the range of about 25,000 to 1,000,000.

The preparation of elastomeric block copolymers is known in the art and can be effected, for example, by successive polymerization of the monomers in solution in the presence of a monolithium hydrocarbon initiator.

Furthermore, the olefinic double bonds of the block copolymers can be selectively hydrogenated in any conventional manner, e.g., the use of molecular hydrogen and catalysts based on metals or salts of metals of group VIII of the Periodic Table. Further aspects of the preparation of the elastomeric block copolymers can be found in European Patent 0,095,098, in U.S. Patents 3,113,986 and 3,700,633, in German Patent Disclosure 1,222,260, and in German Letters of Disclosure 2,013,263.

Another type of modifier resin for this invention is a core-shell interpolymer resin. Some of these types of materials are described in EP-A 288,787.

Preferred core-shell materials include a cross-linked acrylate rubber core, such as butyl acrylate. Surrounding this cross-linked core is a shell-like structure of cross-linked vinyl aromatic resin, preferably styrene, which surrounds and interpenetrates the cross-linked core. Incorporation of small amounts of other monomers such as acrylonitrile and/or methylmethacrylate with styrene in the shell can also provide useful products if the resulting copolymer shell does not cause significant incompatibility with the PPE matrix.

The interpenetrating network of these core-shell modifier materials is provided when the monomers forming the shell structure are polymerized and cross-linked in the presence of the previously polymerized and cross-linked acrylate core.

The core-shell interpolymer compositions may be formed by the following type of two-step, sequential polymerization process:

1. emulsion polymerizing an acrylate monomer charge (herein designated "acrylate", for purposes of the present invention), of at least one $C_2$-$C_{10}$ alkyl acrylate, $C_8$-$C_{22}$ alkyl(meth)acrylate, or compatible mixtures thereof, in an aqueous polymerization medium in the presence of an effective amount of a suitable di- or polyethylenically unsaturated cross-linking agent for such type of monomer, with the $C_4$-$C_8$ alkyl acrylates being the preferred acrylate monomers for use in this step; and

2. emulsion polymerizing a monomer charge of styrene in an aqueous polymerization medium, also in the presence of an effective amount of a suitable di- or polyethylenically unsaturated cross-linking agent for such monomers, said polymerization being carried out in the presence of the product from Step 1 so that the cross-linked (meth)acrylate and cross-linked styrene components form an interpolymer wherein the respective phases surround and penetrate one another.

Such a two-stage polymerization process is analogous to the three step process for producing an acrylate-styrene-acrylonitrile (ASA) terpolymer, as taught by Yu et al. in U.S. Patent 3,944,631 (which is hereby incorporated by reference).

This core-shell product generally comprises from about 40% to about 90%, by weight, of at least one of the above-identified cross-linked acrylates, and from about 10% to about 60%, by weight, of the cross-linked styrene component. It contains little graft polymerization between the cross-linked styrenic copolymer components and the cross-linked acrylate polymeric component. In the preferred embodiments, the core will comprise 50 to 80 weight percent cross-linked acrylate, based on the weight of cross-linked core and

cross-linked shell taken together. Further details regarding this type of polymer composition can be found in the aforementioned U.S. Patent. No. 3,944,631. The core-shell interpolymer provided by the foregoing process can be isolated and dried by conventional means, and can be provided in powder or pellet form.

Other useful core-shell materials and methods for their preparation are taught in U.S. Patents 4,681,915 (G. Bates, G. Chambers, and S.P. Ting), and 4,684,696 (G. Bates, W. Haaf, and S.P. Ting), as well as in U.S. Patents 3,655,826; 3,661,994; 3,793,402; 3,808,180; and 3,985,703, all incorporated herein by reference.

Pclyolefins are sometimes included in compositions of this invention. Such resins are generally known in the art and are described, for example, in the above-mentioned U.S. Patents 4,166,055, 4,584,334, 4,383,082, in European Patent 0,095,098, European Patent application 362,660, and on page 836 of The Condensed Chemical Dictionary, Tenth Edition, Van Nostrand Reinhold Company, the entire contents of all of these references being incorporated herein by reference. The polyolefin is usually a polymer formed from an olefin of the general formula $C_nH_{2n}$. Homo- or copolymers may be used, as well as combinations of polyolefins.

Illustrative polyolefins are polyethylene, polypropylene, polyisobutylene, copolymers of ethylene and propylene, as well as copolymers of ethylene and organic esters such as ethylene ethyl acrylate, ethylene methyl acrylate, and the like. The preparation of these polyolefins is generally well-known in the art.

The preferred polyolefins are polyethylene, polypropylene and polybutylene. Especially preferred are low density polyethylene (LDPE), linear low density polyethylene (LLDPE), medium density polethylene (MDPE), high density polyethylene (HDPE), and high impact (rubber-modified) polypropylene.

The amount of polyolefin present in the composition is usually in the range of about 0.25% to about 3% by weight, and in preferred embodiments, from about 0.5% to about 1.5% by weight, based on the total weight of the composition.

The compositions of this invention may further include a wide variety of other additives, depending on the contemplated product end use. Examples of such additives include effective amounts of flame retardants, plasticizers, additional reinforcing agents such as graphite, clay, and other mineral fillers; antioxidants, mold release agents, pigments, and dyes.

Among the useful flame retarding compounds are organic and inorganic halogen and phosphorus compounds, with or without synergists such as, for example, antimony trioxide.

Among the additives which improve the processing or stability of these compositions are zinc sulfide, zinc oxide, mineral oil, polyolefins such as polyethylene; metal salts of $C_4$-$C_8$ alkyl sulfonates; and phosphites, such as alkyl phosphites, aryl phosphites, alkylaryl phosphites, diphosphites, polyphosphites, and thiophosphites.

As mentioned above, the compositions of this invention exhibit very good melt flow without substantial sacrifice of any other properties. Furthermore, they do not require the use of elastomeric block copolymers for most end uses.

The components of these compositions can be compounded and molded by conventional means. The order of mixing and degree of shear during extrusion can be varied. Those of ordinary skill in the art will be able to achieve optimum processing conditions which may vary for different thermoplastic applications.

In one embodiment, all of the ingredients can be blended and extruded simultaneously. Alternatively, it may be desirable to pre-blend or pre-compound some of the ingredients, while the remaining ingredients are charged later in a downstream compounding or extrusion process. Conventional single or twin screw extrusion technology may be utilized.

Another aspect of this invention is an improved method for preparing molded articles from PPE compositions. The preliminary step usually calls for melt-mixing (often done after dry-blending) about 20-80 weight percent low molecular weight PPE resin (as described above) with about 5-50 weight percent glass fibers. The melt-mixing is typically carried out at a temperature of about 250° C to about 325° C. An extruder is especially suitable for this purpose, although various other mixing techniques may be used.

The material is then cooled to about room temperature; this is often most efficiently accomplished by immersion in water. After being cooled, the material is usually pelletized and then molded into any desired shape by known methods, e.g., the use of an injection molding machine. The molding step is usually carried out at a melt temperature of about 225° C to about 275° C.

The following examples are provided to illustrate various embodiments of this invention. It is to be understood, however, that the embodiments are given for the purpose of illustration only, and do not and should not be regarded as limiting the invention to any of the specific materials or conditions described therein. All parts and percentages are given by weight unless otherwise indicated.

EXAMPLES

The following materials were used in the examples, unless otherwise indicated:

(A) Polyphenylene Ether (PPE):

Poly(2,6-dimethyl-1,4-phenylene) ether resin, having an intrinsic viscosity (in chloroform at 25°C) as indicated in the tables.

(B) Polystyrene:

Butadiene-modified polystyrene (referred to here as "HIPS").

(C) Glass:

Bonding-type, chopped glass fibers, compositionally similar or identical to OCF grade 497, a product of Owens Corning Fiberglass Company.

(D) Flame Retardant/Plasticizer:

Mixture of alkylated phenol materials which have been phosphorylated.

In each example, the constituents were combined by dry-blending, and then fed to a 30 mm Werner and Pfleiderer twin screw extruder.

The successive extruder zone temperatures were in the range of about 600°F - 650°F (316°C - 343°C).

The extrudate was cool-water quenched and then pelletized. The compositions were then molded into test specimens on a 1.75 ton, 8 oz. shot size molding machine.

EXAMPLE 1

Samples 1-4 contained the following components:

| Component | Parts by Weight (pbw) |
|---|---|
| PPE (IV shown in Table 1) | 40 |
| HIPS | 40 |
| GLASS | 20 |

Test results are set forth in Table 1.

TABLE 1

| Properties | Sample* 1 (PPE IV of 0.46) | Sample* 2 (PPE IV of 0.40) | Sample 3 (PPE IV of 0.27) | Sample 4 (PPE IV of 0.27) |
|---|---|---|---|---|
| Tensile Strength[a] (psi) | 12,130 | 12,230 | 12,320 | 11,500 |
| Elongation[b] (%) | 8 | 8 | 6 | 6 |
| Izod Impact Strength[c] (ft.lb/in) | 2.1 | 2.2 | 1.7 | 1.6 |
| Dynatup Impact Strength[d] (in-lbs) | 112 | 107 | 93 | 51 |
| Flexural Strength[e] (psi) | 18,890 | 19,030 | 17,330 | 15,660 |
| Flexural Modulus[f] (kpsi) | 650 | 666 | 684 | 668 |
| Channel Flow (in.) (550°F, 10,000 psi) | 16.3 | 18.3 | 31.8 | 33.2 |

* Outside the scope of this invention

(a) ASTM D 638

(b) ASTM D 638

(c) ASTM D 256

(d) ASTM D 3763

(e) ASTM D 790

(f) ASTM D 790

The data demonstrate that compositions of the present invention exhibit unusually high melt flow. Furthermore, while there was a slight decrease in some properties, such as impact strength and elongation, the overall properties remained very favorable for various end uses.

EXAMPLE 2

Samples 5-7, prepared as in Example 1, contained the following:

| COMPONENT | PARTS BY WEIGHT (pbw) |
|---|---|
| PPE (as shown in Table 2) | 35 |
| HIPS | 35 |
| GLASS | 30 |

Table 2 sets forth the results of tests performed on each specimen.

TABLE 2

| Properties | Sample* 5 (PPE IV of 0.46) | Sample* 6 (PPE IV of 0.40) | Sample 7 (PPE IV of 0.27) |
|---|---|---|---|
| Tensile Strength[a] (psi) | 13,790 | 13,750 | 14,590 |
| Elongation[b] (%) | 7 | 7 | 6 |
| Izod Impact Strength[c] (ft.lb/in) | 2.2 | 2.1 | 1.9 |
| Dynatup Impact Strength[d] (in-lbs) | 105 | 117 | 96 |
| Flexural Strength[e] (psi) | 21,330 | 20,660 | 20,020 |
| Flexural Modulus[f] (kpsi) | 848 | 849 | 923 |
| Channel Flow (in.) (550°F, 10,000 psi) | 15.5 | 17.0 | 29.2 |

* Outside the scope of this invention

(a) ASTM D 638

(b) ASTM D 638

(c) ASTM D 256

(d) ASTM D 3763

(e) ASTM D 790

(f) ASTM D 790

Table 2 demonstrates that compositions of this invention containing even higher levels of glass than in Example 1 still exhibit excellent melt flow characteristics, without a significant decrease in any of the other properties.

EXAMPLE 3

Samples 8-11, prepared as in Example 1, contained the following:

| COMPONENT | PARTS BY WEIGHT (pbw) |
|---|---|
| PPE (as shown in Table 3) | 43 |
| HIPS | 22 |
| GLASS | 30 |
| PHOSPHATE-BASED MIXTURE | 5 |

Table 3 sets forth the results of tests performed on specimens of each sample.

TABLE 3

| Properties | Sample* 8 (PPE IV of 0.46) | Sample* 9 (PPE IV of 0.40) | Sample 10 (PPE IV of 0.27) | Sample 11 (PPE IV of 0.27) |
|---|---|---|---|---|
| Tensile Strength[a] (psi) | 16,733 | 15,700 | 13,130 | 12,920 |
| Elongation[b] (%) | 6 | 6 | 5 | 5 |
| Izod Impact Strength[c] (ft.lb/in) | 2.2 | 2.3 | 1.4 | 1.4 |
| Dynatup Impact Strength[d] (in-lbs) | 108 | 120 | 85 | 48 |
| Flexural Strength[e] (psi) | 23,570 | 23,450 | 17,843 | 18,040 |
| Flexural Modulus[f] (kpsi) | 1003 | 944 | 896 | 902 |
| Channel Flow (in.) (550°F, 10,000 psi) | 16.7 | 17.5 | 37.3 | 36.9 |

* Outside the scope of this invention

(a) ASTM D 638

(b) ASTM D 638

(c) ASTM D 256

(d) ASTM D 3763

(e) ASTM D 790

(f) ASTM D 790

Table 3 again demonstrates the unexpectedly large increase in melt flow by the use of the lower IV material. The addition of the phosphate compound, which can enhance flame retardance, did not appear to affect this melt flow phenomenon. Although tensile, impact, and flexural properties were somewhat lower in samples 10 and 11, these values are still excellent for many end use applications.

EXAMPLE 4

This example demonstrates the advantages, in certain embodiments of this invention, of excluding block copolymers of the A-B-A[1] type from the compositions. Samples 12 and 13 contained the following:

| COMPONENT | PARTS BY WEIGHT |
|---|---|
| PPE(0.26IV) | 50 |
| HIPS | 24 |
| PHOSPHATE-BASED MIXTURE | 6 |
| GLASS FIBERS | 30 |

Furthermore, sample 13, the control, contained 5 pbw of KRATON® KD-1101 rubber, an A-B-A' triblock polymer of the type described above.

Table 4 sets forth the results of tests performed on each sample.

TABLE 4

| Properties* | Sample 12 | Sample 13 |
|---|---|---|
| Tensile Strength (psi) | 11.3 | 12.9 |
| Elongation (%) | 4.6 | 5.7 |
| Izod Impact Strength (ft.lb/in) | 0.8 | 1.6 |
| Flexural Strength (psi) | 13.9 | 19.6 |
| Flexural Modulus (kpsi) | 811 | 845 |
| Flame Retardance (1/16")[(a)] | V1; 6.1 seconds | V1; 18.3 seconds |

*According to tests used in previous examples.

(a) UL 94

The data of Table 4 demonstrate that flame retardance, as measured by the number of seconds required for flame extinguishment, is enhanced by the omission of the triblock material.

While the present invention has been illustrated by a detailed description of some of its embodiments, those skilled in the art will understand that various changes in form and detail can be made herein without departing from the true scope of the invention. For that reason, the invention should be limited only by the claims appended hereto.

## Claims

1. An improved thermoplastic composition comprising:
   a) at least one polyphenylene ether resin, having an intrinsic viscosity of less than about 0.4 dl/g as measured in solution in chloroform at 25 ° C; and
   b) about 5 weight percent to about 50 weight percent glass fibers, based on the weight of the entire composition.

2. The composition of claim 1 wherein the intrinsic viscosity of the polyphenylene ether resin is less than about 0.35 dl/g.

3. The composition of claim 2 wherein the intrinsic viscosity of the polyphenylene ether resin is less than about 0.30 dl/g.

4. The composition of claim 1 wherein the polyphenylene ether is a homopolymer or copolymer comprised of a plurality of structural units of the formula

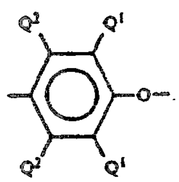

wherein each $Q^1$ is independently halogen, primary or secondary lower alkyl, phenyl, haloalkyl, aminoalkyl, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$.

5. The composition of claim 4 wherein each $Q^1$ is an alkyl group having from 1 to 4 carbon atoms, and each $Q^2$ is hydrogen.

6. The composition of claim 5 wherein the polyphenylene ether resin is poly(2,6-dimethyl-1,4-phenylene)-ether.

7. The composition of claim 4 wherein the polyphenylene ether is derived from the group consisting of 2,6-xylenol, 2,3,6-trimethylphenol, and mixtures of these compounds.

8. The composition of claim 1, further comprising about 5% to about 55% by weight vinyl aromatic polymer.

9. The composition of claim 8 wherein the vinyl aromatic polymer is rubber-modified polystyrene.

10. The composition of claim 1, substantially free of elastomeric block copolymers of the A-B-$A^1$ type, wherein A and $A^1$ are polymerized vinyl aromatic compounds, and B is derived from at least one polymerized conjugated diene.

11. The composition of claim 1, comprising about 20 weight percent to about 30 weight percent glass fibers, based on the weight of the entire composition.

12. The composition of claim 11, wherein the glass fiber is of the bonding type.

13. The composition of claim 1, further comprising a phosphate compound.

14. The composition of claim 1, further comprising a polyolefin.

15. The composition of claim 14, wherein the polyolefin is selected from the group consisting of low

density polyethylene, linear low density polyethylene, medium density polyethylene, high density polyethylene, polypropylene, rubber-modified polypropylene, ethylene ethyl acrylate, ethylene methyl acrylate, and mixtures of any of the foregoing.

**16.** The composition of claim 1, further comprising a core/shell polymer.

**17.** The composition of claim 16, wherein the core/shell polymer comprises a cross-linked polyacrylate rubber core which is surrounded by a cross-linked vinyl aromatic resin.

**18.** The composition of claim 1, further comprising an elastomeric block copolymer.

**19.** An improved thermoplastic composition consisting essentially of:

a) at least one polyphenylene ether resin, having an intrinsic viscosity of less than about 0.4 dl/g as measured in solution in chloroform at 25°C, and

b) about 5 weight percent to about 50 weight percent glass fibers, based on the weight of the entire composition; and

c) about 5 weight percent to about 55 weight percent vinyl aromatic resin, based on the weight of the entire composition.

**20.** An improved method for preparing molded articles from compositions which comprise polyphenylene ethers, said method comprising:

a) melt-mixing at least one low molecular weight polyphenylene ether resin with about 5 weight percent to about 50 weight percent glass fibers; and

b) molding the material into a desired shape.

**21.** The method of claim 20 wherein the intrinsic viscosity of the polyphenylene ether resin is less than about 0.4 dl/g.

**22.** The method of claim 21 wherein step (a) is carried out at a temperature of about 250°C to about 325°C.

**23.** The method of claim 22 wherein the melt-mixing is carried out in an extruder.

**24.** The method of claim 22 wherein molding step (b) is carried out at a melt temperature of about 225°C to about 275°C.

**25.** The method of claim 24 wherein step (b) is carried out in an injection molding machine.